# EUROPEAN PATENT APPLICATION

(11) **EP 2 767 519 A1**
(43) Date of publication of application: **20.08.2014**
(21) Application number: 12837173.9
(22) Date of filing: 24.09.2012
(51) Int. Cl.: C03C 17/10, B65G 49/02, B65G 49/05, C03C 17/32, B65G 17/14

(54) **WORKING METHOD FOR A SYSTEM FOR PARTIAL MIRRORING OF GLASS TUBES, AND SAID SYSTEM**

(30) Priority: 26.09.2011 ES 201101045
(71) Applicant: Abengoa Solar New Technologies, S.A., 41018 Sevilla (ES)
(72) Inventor: NUÑEZ BOOTELLO, Juan Pablo, E-41014 - Sevilla (ES); GOMEZ RUIZ, Eduardo, E-41014 - Sevilla (ES)
(74) Representative: Garcia-Cabrerizo y del Santo, Pedro Maria
(86) International application number: PCT/ES2012/000247
(87) International publication number: WO 2013/045720

(57) **Abstract**

Working method for a system for partial mirroring of glass tubes and said system, made up by an tube supply facility, a chain where the mirroring is carried out in different fixed stations and a tube output facility, in which the main partial mirroring steps are the following:
- cleaning the glass tube
- sensitizing the surface
- washing
- optional activation or super-sensitization step
- washing
- plating
- washing
- drying

in the case of external partial mirroring, the following steps are added:
- depositing the copper layer
- washing
- depositing anti-corrosion paint
- depositing mechanical and UV protective paint
- curing the paint
- external drying of the tube

## Description

### Technical field of the invention

The invention belongs to the field of metal coatings of glass surfaces, more specifically, it relates to the non-electrolytic mirroring of a glass tube by spray.

This glass tube can be a part of a receiving tube for a solar collector.

### Background of the invention

The main principle of the thermal-solar technology is based on the concept of the concentration of solar radiation to heat a heat-carrying fluid and generate electricity. Said heat-carrying fluid circulates through the interior of an absorbent tube, generally metallic, introduced into a glass tube, thus creating vacuum among them which decreases thermal losses. The set of both tubes is known as receiving tube.

There are several types of technologies for thermal-solar plants using receiving tubes, however, in all of them, collecting solar energy and its concentration is one of the greatest challenges.

In order to increase both aspects, different solutions (optical, innovative collector solutions, secondary reconcentrators...) are combined.

One of these solutions, and due to which the need for the present invention is created, consists in placing a secondary reconcentrator in the glass tube. This secondary reconcentrator is a mirror that reflects the solar rays escaping towards the absorbent tube. Due to the foregoing, the partial mirroring of a glass tube to form the secondary reconcentrator becomes a critical problem that needs to be solved.

The state of the art includes several options to mirror a glass tube. Some substrate mirroring forms describe the use of films, reflective metal layers adhered to a plastic substrate, glued to the glass by means of adhesives in order to form the reconcentrator. The use of this technique in our application becomes problematic because, since the secondary reconcentrator is found near the absorbent tube, the adhesives would reach temperatures nearing 100 °C and would degrade and lose their functionality. Therefore, the reflective surfaces formed by films adhered to the glass would not have the optical quality required by this type of applications.

On the other hand, conventional mirrors are manufactured by means of a continuous process in which a thin layer of reflective metal is applied to a substrate, normally glass or plastic. Current mirroring techniques, such as the one described in patent WO 2006/121516 A1, by means of spray, present problems for the partial mirroring of a glass tube due to the fact that, in general, the entire surface of the substrate to be mirrored would be covered by the reflective layer, thus wasting the metal, which is normally silver, copper or aluminum.

There are mainly two groups of mirroring techniques known in the state of the art. Electrolytic techniques, such as, for example, sputtering and vapor deposition techniques, are expensive, require vacuum, an external source of power and the use of ultra-pure metals, as described in patent US 4,579,107 A of David Deakin. These techniques use very expensive equipment which entail a very high initial investment. Patent EP 0 665 304 A1 of Nissin Electric Company describes a solution to apply a metal layer inside a very thin tube, with a diameter smaller than 20 mm. Sputtering and vapor deposition techniques present difficulties in covering the interior of a tube with larger dimensions than the ones established above, since they would need to create a very large magnetic field and in addition, do not allow a partial mirroring because the metal is necessarily deposited around the 360 degrees of its perimeter and are too expensive to be practical.

On the other hand, we have the chemical deposition techniques, which do not require an external source of power. The most well known method among these chemical deposition techniques consists of the immersion of the pieces to be mirrored in a bath mainly containing three agents: a metallic salt, a reducing agent and a complexing agent, which prevents the spontaneous reduction and precipitation during the bath. When the surface to be treated enters the bath, the oxidation-reduction reaction is produced on the pre-activated surface and the metal deposition on the same begins. The advantages of the technical simplicity of immersion or wetting for the mirroring of a glass tube do not compensate the numerous disadvantages presented by this technique, including the instability of the deposition baths when adding metal particles that remain in suspension, the 20 pm thickness per hour-limitation of the kinetics of the deposition and the limited adherence of the deposited metal layer.

Another alternative, which is the best in terms of cost, the thickness of the deposited metal layer, deposition time, accessibility to the geometry to be mirrored and the optical quality of the mirror is the mirroring by means of the chemical spray deposition technique.

Patent US 4,579,107 A of David Deakin describes a solution to mirror a semi-tube with a thermal spray to be used in low-concentration solar collectors. Patent WO 2008/097688 A1 of Hing-wah CHAN describes a method to apply a metal reflective layer to a solid substrate by means of spraying blown metal powder. Thermal sprays, although effective for solar cells, are ineffective for glass tubes because the temperature of the blown powder applied by the spray at high temperatures would degrade or break the glass tube.

Patent WO2010/103125 A1 of Samuel STREMSDOERFER describes a manufacturing method of fully metallic anti-corrosion mirrors using layers of metals other than sliver to protect the mirror against environmental corrosion. Metallic layer protections are not valid for the mirroring of the internal surface of a glass tube since they should be deposited prior to the reflective layer. Simply changing the order of deposition of the layers would not solve the problem either because it would decrease the optical quality of the reflective layer due to the roughness introduced by the metal layers; therefore, it could cause the reconcentrator to divert the rays from the desired focus thus losing its functionality. In turn, this method would not allow the partial mirroring of a glass tube because the entire surface of the substrate to be mirrored is covered by the metal layers, thus wasting the metal, which is normally silver, copper or aluminum.

### Description of the invention

The present invention relates to a working method for a system for mirroring for glass tubes for the application of a reflective metal layer by means of chemical spray deposition on the internal and/or external surface of the tube.

As commented above, the main application to be given to the tube is to be used as the external tube of a solar collector receiver incorporating a secondary reconcentrator. The reflective layer of the mirror with which part of the tube is desired to be coated is the secondary reconcentrator.

Taking into account the function to be performed by the tube, the reflective layer is to be deposited along the glass tube and only in the middle or part of the perimeter of the tube. The entire tube is not mirrored to allow the entry of solar rays through the non-mirrored surface. The reflective surface reflects the concentrated incident solar rays and redirects them towards the absorbent tube so that it absorbs a larger amount of concentrated rays, distributed throughout the entire perimeter improving the efficiency of the collector.

In order to deposit the reflective layer, the glass needs to be put into contact with a metal solution by using a spray, being the optimal method, due to reasons of speed, cost and optical quality of the reflective layer.

A mirroring system formed by a tube supply facility, a mirroring chain and a tube output facility is used in order to achieve the foregoing,

The tube supply facility consists of a flat profile structure with a specific inclination, which contains the tubes and a flange as a retainer. Said inclined structure is aligned with the mirroring chain, and there is a hole among them, where the flange introducing the tubes at the beginning of the chain is placed.

The mirroring chain consists of a continuous and automatized facility comprising two mobile chains supported by rails fixed to a static bedplate, with a series of fixed stations where each tube stops in order to be subjected to the different necessary operations until completing the full mirroring. Each one of these fixed stations has pneumatic cylinder equipment, which come with the appropriate tool for the task to be carried out installed in the extremity of the piston. Optionally, the glass tube can rotate or the tool can rotate as it advances. The tools to be installed are the following:
- For the washing, sensitization, drying and activation steps (corresponding to the fixed stations 1, 2, 3, 4, 5, 7, 8, 10, 11, 14), a diffuser nozzle.
- When the plating and copper deposition steps (corresponding to stations 6 and 9) use two liquids, two spray diffuser nozzles or a single nozzle with a double diffuser are used.

In the case of internal mirroring, the piston of the cylinder is placed inside the glass tube, with the nozzle facing downwards, while in the case of external mirroring, the piston is placed on the glass tube, also with the nozzle facing downwards.

The working procedure of the partial mirroring system of the tube comprises the following steps:
1. Positioning the tube in the deposit of the supply facility,
2. positioning the glass tube in the mirroring chain,
3. moving the glass tube at a constant speed by means of the automatized mechanism of the mirroring chain and stopping the tube at the first fixed station of said chain by means of a sensor or a photoelectric cell,
4. internal and/or external cleaning of the glass tube by means of hot air at 80 °C to eliminate potential residual water absorbed by the internal surface of the glass. This is important for the precise formation of the edges of the mirror. The pneumatic cylinder system covering the tube internally and externally with a diffuser nozzle in its extremity is used to achieve the foregoing,
5. moving the glass tube at a constant speed by means of the automatized mechanism of the mirroring chain until it stops at the second fixed station,
6. sensitizing the internal and/or external surface of the glass tube with the spraying of a sensitization solution, preferably a stannous chloride-based aqueous solution, carried out by the spray diffuser nozzle installed in the pneumatic cylinder mechanism of the second station,
7. moving the glass tube at a constant speed by means of the automatized mechanism of the mirroring chain until it stops at the third fixed station,
8. carrying out an internal and/or external washing of the tube with the spraying of a washing liquid, preferably demineralized water-based. A diffuser nozzle facing downwards is installed in the extremity of the piston for this purpose,
9. moving the glass tube at a constant speed by means of the automatized mechanism of the mirroring chain until it stops at the fourth fixed station,
10. optional activation step for the internal and/or external surface of the glass tube by spraying an activation solution, preferably a palladium chloride-based aqueous solution, by means of a spray diffuser nozzle,
11. moving the glass tube at a constant speed by means of the automatized mechanism of the mirroring chain until it stops at the fifth fixed station,
12. carrying out an internal and/or external washing of the tube by means of a diffuser nozzle spraying the washing liquid, preferably demineralized water,
13. moving the glass tube at a constant speed by means of the automatized mechanism of the mirroring chain until it stops at the sixth fixed station,
14. two plating steps of the internal or external surface of the glass tube by means of two spray diffuser nozzles of a double diffuser nozzle facing downwards, spraying silver in a cationic manner (oxidizing) and a reducing agent, capable of transforming the cationic silver into metal to deposit the reflective metal silver layer on the internal and/or external surface of the glass tube,
15. moving the glass tube at a constant speed by means of the automatized mechanism of the mirroring chain until it stops at the seventh fixed station,
16. carrying out an internal and/or external washing of the tube by spraying a washing liquid, preferably demineralized water-based. A diffuser nozzle facing downwards is installed in the extremity of the piston for this purpose,
17. moving the glass tube at a constant speed by means of the automatized mechanism of the mirroring chain until it stops at the eighth fixed station,
18. optional internal and/or external drying step, consisting in heating the treated surface with air at between 20 and 80 °C by means of a device equal to the cleaning device used in step 4,

In the case of internal mirroring, the tube would jump directly to the last step for the extraction of the tube.

However, in the case of external mirroring, new steps are added to the procedure which deposit a very thin copper layer on the silver layer and three layers of protective paints on the copper layer. The copper layer is generally used to inhibit the corrosion of the silver layer, to delay its darkening and to improve the adhesion of the protective paint that will protect it against the environmental conditions and physical damage on the silver, due to abrasion, for example, extending the useful life of the mirror. The copper layers also allow the mirror to reflect a larger amount of rays, specifically in the UV-ray range.

The partial mirroring procedure for the exterior of the tube of the present invention comprises steps 1 to 18 above and in addition:
19. Moving the glass tube at a constant speed by means of the automatized mechanism of the mirroring chain until it stops at the ninth fixed station,
20. depositing a layer of copper by means of a spray on the external surface of the silver-coated glass tube, using at least one aerosol spraying copper in a cationic manner (oxidizing) and at least one aerosol spraying a reducing agent, capable of transforming the cationic copper into metal,
21. moving the glass tube at a constant speed by means of the automatized mechanism of the mirroring chain until it stops at the tenth fixed station,
22. carrying out an external washing of the tube by spraying a washing liquid, preferably demineralized water-based, by means of a spray. A diffuser nozzle facing downwards is installed for said purpose in the extremity of the piston,
23. moving the glass tube at a constant speed by means of the automatized mechanism of the mirroring chain until it stops at the eleventh fixed station,
24. depositing one or two layers of anti-corrosion paint by means of a spray diffuser nozzle placed in the extremity of the piston and facing downwards,
25. moving the glass tube at a constant speed by means of the automatized mechanism of the mirroring chain until it stops at the twelfth fixed station,
26. depositing mechanical and UV protective paint by means of a spray diffuser nozzle placed in the extremity of the piston and facing downwards,
27. moving the glass tube at a constant speed by means of the automatized mechanism of the mirroring chain until it stops at the thirteenth fixed station,
28. curing the protective paint by means of an open IR heater, used as a lamp, facing downwards, placed on top of the station to heat the tubes at a temperature ranging between 130 and 145 °C,
29. moving the glass tube at a constant speed by means of the automatized mechanism of the mirroring chain until it stops at the fourteenth fixed station,
30. external drying of the tube consisting in heating the treated surface with air at between 20 and 80 °C to eliminate potential residual water absorbed by the internal surface of the glass. This is important for the precise formation of the edges of the mirror. The pneumatic cylinder system covering the tube internally and externally with a diffuser nozzle in its extremity is used to achieve the foregoing,
31. extracting the tube by means of the output facility, which can be manual or automatic according to the needs of each mirroring plant.

The procedure described herein describes each one of the steps in an individualized manner, but grouping several of them to simplify the process is possible. Specifically, steps 6 and 8 can be carried out at the same station by means of the use of a piston with two nozzles, one for sensitization and the other for washing. In such case, step 7 would not exist. Likewise, steps 10 and 12 could be carried out at the same station by means of the use of a piston with two nozzles, one for activation and the other for washing. In such case, step 11 would disappear. Steps 14 and 16 could be carried out at the same station by means of the use of a piston with three nozzles, two for plating and the other for washing. In such case, step 15 would disappear. Steps 20 and 22 could be carried out at the same station by means of the use of a piston with three nozzles, two for the copper step and the other for washing. In such case, step 21 would not exist.

The procedure described in this invention uses spray to apply the different layers due to the fact that this technique is economical, fast, requires a low initial investment and allows controlling the thickness of the deposited layer, allowing homogeneity and the consequent savings in materials.

This system allows the partial mirroring of the entire length or a relevant part of the tube by means of spraying the glass surface in the desired angle in a fast and efficient manner, in order to control the semi-aperture of the mirrored surface.

The use of this method allows mirroring the internal or external surface of a glass tube in a simple and efficient manner. The method is economically effective because it minimizes the thickness of the deposited metal layer and does not require large initial investments. The method forms a reflective layer with optimal reflectivity and high optical quality for mirrors on glass tube substrates. In addition, the method delimits both sides of the mirrored area with straight lines parallel to the longitudinal axis. The glass tube mirrored with this method will be free from visual defects such as roughness, splashes, etc.

The greatest advantage obtained as a result of this invention is the integration of a reflective surface with high optical quality to a receiving tube. This reflective surface forms a secondary reconcentrator integrated to the absorbent tube, allowing the increase of the efficiency of the solar collector, and therefore, the efficiency of the solar plant.

### Description of the drawings

Next, in order to complete the description being made and with the purpose of helping to provide a better comprehension of the invention, a set of drawings representing the following by way of illustration and not by way of limitation, accompany this specification:
Figure 1: sectional view of the mirrored glass tube. Both the internal and external mirroring can be observed.
Figure 2: perspective view of a specific embodiment of the tube supply facility.
Figure 3: perspective profile of the instant when the tube passes to the mirroring chain.
Figure 4: detail of the tube passing to the mirroring chain.
Figure 5: plant view of the automation mechanism of the mirroring processes. One of the fixed stations where the glass tube stops to receive the corresponding process by means of a pneumatic cylinder can be observed.

The references correspond to:
(100) Glass tube
(110) Internal mirroring
(120) External mirroring
(130) Absorbent tube
(200) Tube to be mirrored
(210) Mirroring chain
(220) Beams
(230) Upper flange
(231) Lower flange
(240) Reducing-variable speed engine
(250) Axis
(260) Bearings
(270) Fixed station
(280) Piston
(290) Chains
(300) Tube supply facility
(310) Flat profile structure with inclination
(320) Flange

### Preferred embodiment of the invention

In order to achieve a greater comprehension of the invention, the working procedure of a partial mirroring system for glass tubes according to a preferred embodiment is described below:

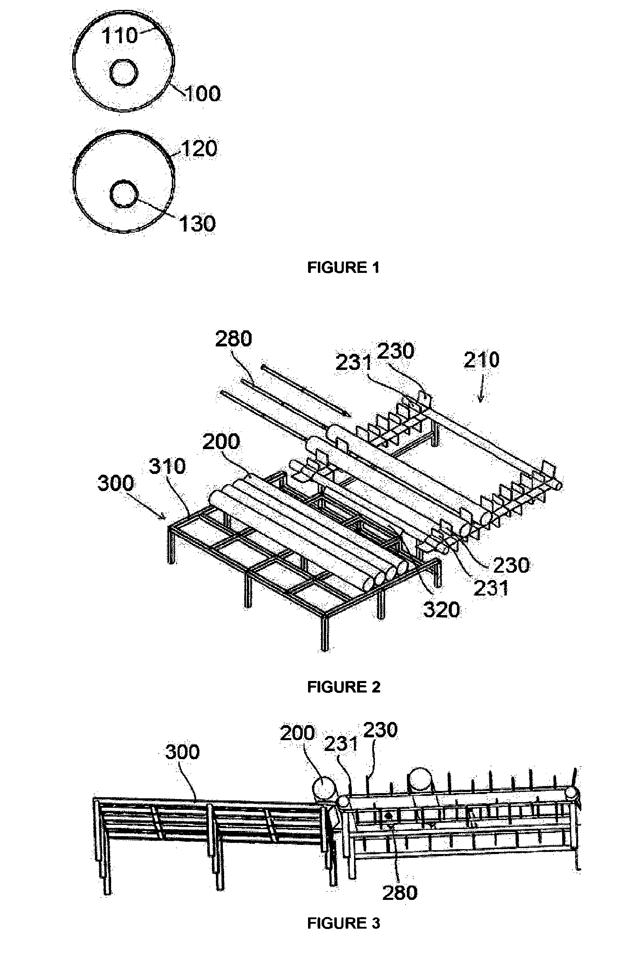

Figure 1 shows a sectional view of the mirrored glass tube (100). The external and internal mirroring can be observed in the internal surface (110) or in the external surface (120), and the absorbent tube (130) can be found inside.
Figures 2 and 3 show a particular embodiment of the tube supply facility (300), consisting of a flat profile structure with a specific inclination (310), which contains the tubes (200) and a fixed flange (320) smaller than the total length of the tube, so that it acts as a retainer of the tubes, being the central part of the tubes supported by said flange (320). Said inclined structure (310) is aligned with the mirroring chain (210) and there is a hole among them where the flange (320) is located, which introduces the tubes (200) at the beginning of the chain.

Once introduced in the chain (210), the tubes are fixed thanks to four flanges (230 and 231), two of which have a greater height than the other two. In order to introduce the tubes (200) in the mirroring chain (210), the flanges with the greatest height (230), located in the two lateral extremities of the chain, push the tube (200) by their two extremities (not where the fixed flange (320) is located) when reaching the tube loading area, and the tube (200) is supported on said flanges (230), which elevate it over the fixed flange (320). This way, the tube is introduced into the chain thanks to the thrust of the flanges (230). The flanges with the lower height (231), pass without touching the tube (200).

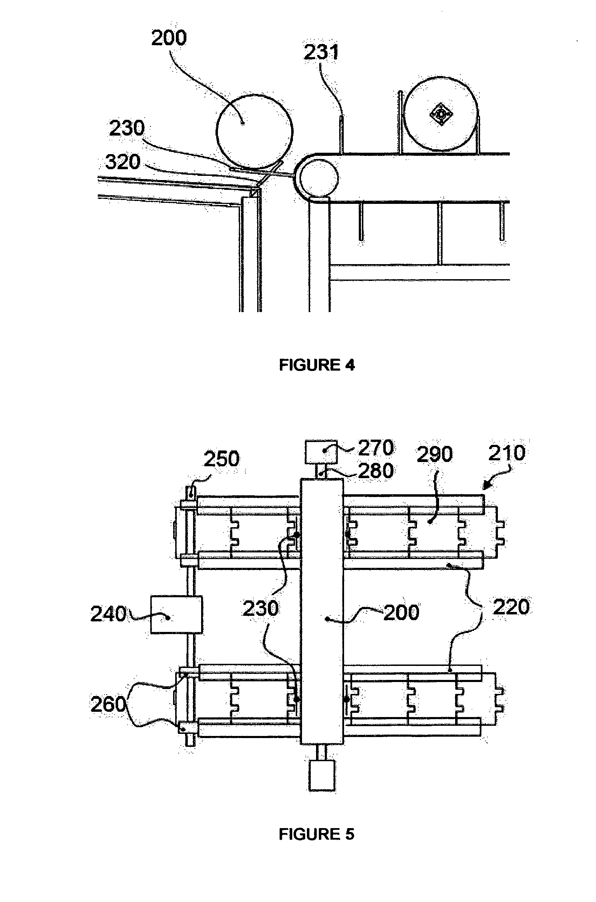

The detail of the passage of a tube (200) from the supply facility to the mirroring chain appears in figure 4.

Figure 5 shows a plant view of the automation mechanism of the mirroring processes. One of the fixed stations (270) can be observed, where the glass tube (200) stops to receive the corresponding process by means of a pneumatic cylinder (280).

The procedure would be the following:
1. Introducing the tube (200) in the supply facility, either manually or by means of automatic loading devices.
2. Positioning the tube (200) in the mirroring chain (210) by means of the supply facility (300), which is made up by a flat profile structure with a specific inclination (310), through which the tubes (200) roll down, and a small flange (320) retaining them at the end. Said inclined structure (310) is aligned with the mirroring chain (210), and there is a hole among them, where the flange (320) introducing the tubes (200) at the beginning of the chain (210) is placed. There are four flanges (230 and 231), two of which have a greater height than the other two and are located in the lateral extremities of the chain to introduce the tubes (200) in the mirroring chain (210). The flanges with the greatest height (230), push the tube (200) by their two extremities (not where the fixed flange (320) is located) when reaching the tube loading area, and the tube (200) is supported on said flanges (230), which elevate it over the fixed flange (320). This way, the tube is introduced into the chain thanks to the thrust of the flanges (230). The flanges with the lower height (231), pass without touching the tube (200).
3. The mirroring chain (210) moves thanks to an engine piling the glass tubes (200) in the final extremity of the supply chain. In order to introduce the glass tubes in an orderly manner in the mirroring chain (210), the glass tubes (200) located at the extremity of the supply installation (300) need to be retained and must enter into the desired position in the mirroring chain (210), immobilized by the flanges (230, 231). The flanges (230, 231), moving along with the mirroring chain, hook the tube (200) retained at the end of the supply facility (300) and immobilize the tube (200) in the desired position of the mirroring chain (210).
4. Moving the glass tube (200) already introduced in the mirroring chain (210) by means of the supply facility. The tube (200) is supported on a chain (290) joined by links. This chain (290) moves on crowns calibrated to reduce friction. Said crowns are located on four parallel beams (220), supported by a fixed bedplate. The glass tube (200) remains static over the chain (290) thanks to the four flanges (230, 231), which are fixed to four drills made on the chain (290) that ensure the appropriate immobilization of the tube (200) during the entire process. The chain (290) moves thanks to a reducing-variable speed engine set (240), which rotates an axis (250) at a constant speed. The axis (250) is fixed to the system thanks to four bearings (260), which are screwed to the edge of the beams (220). The axis has a serrated wheel making the chain (290) move in order to displace the glass tube (200) until it stops by activating a sensor, preferably a photoelectric cell or a pneumatic sensor located in the fixed station (270). The fixed stations are arranged along the mirroring chain (210), equispaced, in order to develop all the steps of the method. Each fixed station is composed by one or two pneumatic cylinders whose piston (280) penetrates in the longitudinal direction of the tube (200), in the case of the internal mirroring, and runs over the tube (200) according the longitudinal direction in the case of external mirroring.
5. Internal and/or external cleaning of the glass tube by means of hot air at 80 °C, using the system of a piston (280) having a diffuser nozzle in the extremity covering the tube internally and externally.
6. Moving the glass tube (200) at a constant speed by means of the automated mechanisms of the mirroring chain until it stops at the second fixed station.
7. Sensitizing the internal and/or external surface of the glass tube (200) by spraying a sensitization solution. This step consists in spraying a solution on the surface to be mirrored with a spray so that the silver layer is deposited in a fast and uniform manner and adheres strongly. The solution sprayed can consist of a stannous chloride-based aqueous solution (SnCl2, 2H20) or a SnSO4 / H2SO4 / quinol / alcohol solution. The stannous chloride solution is typically used with a concentration of 0.005 and 0.2 % by weight of pure stannous chloride and a solution pH between 2 and 5. However, the sensitization solution can vary broadly in composition and concentration, depending, among other factors, on the time elapsed between its preparation and its application. This sensitization solution is in contact with the substrate long enough so that a thin layer of molecules is absorbed in the surface of the substrate to be mirrored. The time varies according to the concentration used, but is typically less than 30 seconds, and preferably less than 20 seconds. In order to carry out this operation, two spray diffusers or a double diffuser facing downwards are installed in the extremity of the piston (280).
8. Moving the glass tube (200) at a constant speed by means of the automatized mechanism of the mirroring chain (210) until it stops at the third fixed station.
9. Carrying out an internal or external washing of the tube (200), consisting in making the entire surface to be mirrored or part thereof enter into contact with one or several liquid washing sources. This process, which will repeated at different times during the method of the present invention, is carried out by spraying a washing liquid, preferably demineralized water-based. Two diffusers, or a double diffuser facing downwards, are installed in the extremity of the piston (280) for this purpose.
10. Moving the glass tube (200) at a constant speed by means of the automatized mechanism of the mirroring chain (210) until it stops at the fourth fixed station.
11. Optional activation or super-sensitization step consisting of the spraying of an activation solution, preferably a palladium chloride or silver chloride-based aqueous solution suitable to react with Sn2+ and forming nucleation centers in the surface of the substrate that increase the adhesion of the metal silver layer. Typically, a palladium dichloride aqueous solution at 0.02% could be used. The time varies according to the concentration used, but is typically less than two minutes and preferably less than 45 seconds.
12. Moving the glass tube (200) at a constant speed by means of the automatized mechanism of the mirroring chain (210) until it stops at the fifth fixed station.
13. Carrying out an internal and/or external washing of the tube (200) equal to the previous one (step 8).
14. Moving the glass tube (200) at a constant speed by means of the automatized mechanism of the mirroring chain (210) until it stops at the sixth fixed station.
15. The plating step consists in the deposition of a metal silver layer on the surface of the glass tube (200) to form the reflective layer. Basically, a silver solution and a reducing solution are mixed before entering into contact with the substrate to be mirrored by means of the spray. The ionic silver solution can be any solution in which silver is presented in its ionic state and is very soluble in water in order to facilitate its application by means of a spray and its reaction with the reducing agent. Therefore, the silver solution can be formed with silver salts or complexes. Ammonium is the preferred complex and is normally used to form silver nitrate and ammonium solutions. The reducing solution can be formed with inverted sugars, N-methylglucamine, D-glucamine, glucono-delta-lactone (GDL) or other components known as reducing agents. Normally, sodium hydroxide or ammonium hydroxide is added to one of the solutions to create an appropriate pH so the reaction takes place in optimal conditions. Typically, an aqueous solution of formaldehyde-dextrose with a concentration from 0.005 to 5 % by weight, preferably from 0.008 to 1 % by weight could be used. A possible way of preparing the silver solution (solution A) and the reducing solution (solution B) is detailed below:
   - Solution A: 6 g of silver nitrate, 12 ml of ammonium and 4 g of sodium hydroxide in 1000 ml of distilled water.
   - Solution B: 10 g of dextrose and 0.2 ml of formaldehyde in 1000 ml of distilled water.
   The contact time of the reducing and silver solutions must be enough so that a reflective silver layer with a thickness between 40 and 140 nm, preferably 80 and 120 nm, is deposited on the surface of the glass tube. Normally, this time is less than two minutes and preferably, 100 seconds or less. The reducing and silver solutions can be applied alternatively or simultaneously by means of a double diffuser spray or by means of two sprays sprayed at the same time. The simultaneous spraying of the solutions is preferable, and, when possible, the mixture of the solutions sprayed must be carried out just before they enter into contact with the glass substrate. The amount of silver deposited according to the method of the present invention is smaller than 1000 mg/m², obtaining optimal optical quality and reflectivity for the metal silver layer deposited on the surface of the glass tube (200).
16. Moving the glass tube (200) at a constant speed by means of the automatized mechanism of the mirroring chain (210) until it stops at the seventh fixed station.
17. Carrying out an external and/or internal washing of the tube (200) like the previous ones.
18. Moving the glass tube (200) at a constant speed by means of the automatized mechanism of the mirroring chain (210) until it stops at the eighth fixed station.
19. Carrying out an internal and/or external drying of the tube (200), consisting in heating the treated surface with air at between 20 and 80 °C. This process is carried out to eliminate water and vapor from the treated surface and increase the adherence of the metal layer and the final efficiency of the reflective layer, by means of a device equal to the cleaning device of step 4.
   In the case of internal mirroring, the tube would pass directly to the last step, the extraction of the tube (200). However, in the case of external mirroring, a series of steps after drying (step 18) are added, which are the following:
20. Moving the glass tube (200) at a constant speed by means of the automatized mechanism of the mirroring chain (210) until it stops at the ninth fixed station.
21. Depositing the copper layer. This copper layer deposition step is generally carried out by making the plated surface to be treated enter into contact with an aqueous alkaline copper solution containing one copper salt soluble in water, one reducing agent, one tartrate salt, a pH-controlling agent and a salt from a metal selected from the group consisting of cobalt or nickel. The copper solution is prepared by dissolving a copper salt in water, such as copper sulfate, followed by dissolving a nickel or cobalt salt, such as nickel sulfate or cobalt sulfate, mixing the solution when necessary. Next, a commercial aqueous formaldehyde solution, such as an aqueous solution with 37% by weight of formaldehyde, is added. On the other hand, the reducing solution is prepared with tartrate salt, such as sodium-potassium tartrate, a pH-controlling agent, such as sodium hydroxide, which ensures a basic pH, and water. The reducing and copper solutions can be applied alternatively, one after the other in other words, or simultaneously by means of a double diffuser spray or two sprays spraying at the same time. The simultaneous spraying of the solutions is preferable, and when possible, the mixture of the solutions sprayed must be carried out just before they enter into contact with the glass substrate. In a particular embodiment, the copper layer presents a minimum thickness of 300 mg/m².
22. Moving the glass tube (200) at a constant speed by means of the automatized mechanism of the mirroring chain (210) until it stops at the tenth fixed station.
23. Carrying out an external washing of the tube by means of a spray with the spraying of a washing liquid, preferably demineralized water-based. A diffuser nozzle facing downwards is installed in the extremity of the piston for this purpose.
24. Moving the glass tube (200) at a constant speed by means of the automatized mechanism of the mirroring chain (210) until it stops at the eleventh fixed station.
25. Depositing one or two layers of anti-corrosion paints. The copper layer is generally covered by one or more layers of protective paint. Said paint can be lead-free or substantially lead-free and can be alkyd resin, epoxy, vinyl or polyurethane-based, which are known in the state of the art. The protective paint selected is highly resistant to environmental conditions and is light and strong. These layers can be sprayed by means of a diffuser nozzle facing downward. The thickness of the protective paint layer(s) can vary in a broad range, but will be preferably lower than 100 µm.
26. Moving the glass tube (200) at a constant speed by means of the automatized mechanism of the mirroring chain (210) until it stops at the twelfth fixed station.
27. Depositing mechanical and UV protective paint. In addition to the anti-corrosion paint, the selected protective paint is applied, which will grant special resistance against corrosion, UV rays and abrasion to the mirror. These layers will be sprayed by means of a diffuser nozzle facing downwards. The thickness of the protective paint layer(s) can vary but will be preferably lower than 100 µm.
28. Moving the glass tube (200) at a constant speed by means of the automatized mechanism of the mirroring chain (210) until it stops at the thirteenth fixed station.
29. Curating the protective paint by means of an infrared oven at temperatures ranging between 130 -145 °C.
30. Moving the glass tube (200) at a constant speed by means of the automatized mechanism of the mirroring chain (210) until it stops at the fourteenth fixed station.
31. External drying of the tube (200), which consists in heating the treated surface with air at between 20 and 80 °C.
32. Extracting the tube (200) by means of the output facility, which will be manual or automatic depending on the needs of each mirroring plant.

Effluents can be produced during the different phases of the present invention, which will be treated and recycled appropriately to be reused and to reduce the environmental impact.

This system is especially designed for the partial mirroring of solar receiving tubes, but its extension to other fields of the industry requiring similar characteristics is not ruled out.

## Claims

1. Working method for a system for partial mirroring of glass tubes including a tube supply facility, a mirroring chain with different fixed stations in which the different steps for the partial mirroring of the tube are carried out, and at least one sensor and at least one pneumatic cylinder (270) are found at each fixed station, and said pneumatic cylinder (270) has the corresponding tool installed at each extremity and covers the tube (200) longitudinally, and a tube output facility, and said procedure comprises the following steps:
(1) Positioning the tube (200) in the supply facility,
(2) positioning the tube (200) in the mirroring chain (210) by means of the supply facility,
(3) moving the glass tube (200) located in the mirroring chain (210) until the first fixed station (270),
(4) internal and/or external cleaning of the glass tube (200) by means of air,
(5) moving the glass tube (200) located in the mirroring chain (210) until the second fixed station (270),
(6) sensitizing the internal and/or external surface of the glass tube (200) with the spraying of a sensitization solution,
(7) moving the glass tube (200) located in the mirroring chain (210) until the third fixed station (270),
(8) carrying out an internal and/or external washing of the tube (200), consisting in putting the entire surface to be mirrored or part thereof into contact with one or several liquid washing sources, preferably demineralized water, by means of a diffuser,
(9) moving the glass tube (200) located in the mirroring chain (210) until the fourth station (270),
(10) optional activation or super-sensitization step for the internal and/or external surface of the glass tube by spraying an activation solution,
(11) moving the glass tube (200) located in the mirroring chain (210) until the fifth fixed station (270),
(12) carrying out an internal and/or external washing of the tube (200) like the one in step 8,
(13) moving the glass tube (200) located in the mirroring chain (210) until the sixth fixed station (270),
(14) carrying out the plating or deposition of a metal silver layer on the surface of the glass tube (200) to form the reflective layer by means of a diffuser,
(15) moving the glass tube (200) located in the mirroring chain (210) until the seventh fixed station (270),
(16) carrying out an internal and/or external washing of the tube (200) like the one in step 8,
(17) moving the glass tube (200) located in the mirroring chain (210) until the eighth fixed station (270),
(18) carrying out an internal and/or external drying of the tube (200), consisting in heating the treated surface with air at between 20 and 80 °C,
in the case of external partial mirroring, the following steps are added:
(19) moving the glass tube (200) located in the mirroring chain (210) until the ninth fixed station (270),
(20) depositing a copper layer by means of at least one spray,
(21) moving the glass tube (200) located in the mirroring chain (210) until the tenth fixed station (270),
(22) carrying out an external washing of the tube (200) by means of spraying a washing liquid, preferably demineralized water-based.
(23) moving the glass tube (200) located in the mirroring chain (210) until the eleventh fixed station (270),
(24) depositing one or two layers of anti-corrosion paint by spraying,
(25) moving the glass tube (200) located in the mirroring chain (210) until the twelfth fixed station (270),
(26) depositing mechanical and UV protective paint by spraying,
(27) moving the glass tube (200) located in the mirroring chain (210) until the thirteenth fixed station (270),
(28) optional curating step for the protective paint by means of an infrared oven,
(29) moving the glass tube (200) located in the mirroring chain (210) until the fourteenth fixed station (270),
(30) external drying of the tube consisting in heating the treated surface with air at between 20 and 80 °C,
(31) extracting the tube by means of the output facility, which can be manual or automatic.

2. Working method for a system for partial mirroring of glass tubes including a tube supply facility, a mirroring chain with different fixed stations in which the different steps for the partial mirroring of the tube are carried out, and at least one sensor and at least one pneumatic cylinder (270) are found at each fixed station, and said pneumatic cylinder (270) has the corresponding tool installed at each extremity and covers the tube (200) longitudinally, and a tube output facility, and said procedure comprises the following steps:
(1) Positioning the tube (200) in the supply facility,
(2) positioning the tube (200) in the mirroring chain (210) by means of the supply facility,
(3) moving the glass tube (200) located in the mirroring chain (210) until the first fixed station (270),
(4) internal and/or external cleaning of the glass tube (200) by means of air,
(5) moving the glass tube (200) located in the mirroring chain (210) until the second fixed station (270),
(6) sensitizing the internal and/or external surface of the glass tube (200) with the spraying of a sensitization solution and carrying out an internal and/or external washing of the tube (200), consisting in making the surface to be mirrored or part thereof enter into contact with one or several liquid washing sources, preferably demineralized water, by means of a diffuser,
(7) moving the glass tube (200) located in the mirroring chain (210) until the third fixed station (270),
(8) optional activation or super-sensitization step by means of spraying and carrying out an internal and/or external washing of the tube (200) like the one in step 6,
(9) moving the glass tube (200) located in the mirroring chain (210) until the fourth station (270),
(10) carrying out the plating or deposition of a metal silver layer on the surface of the glass tube (200) to form the reflective layer by means of a diffuser and carrying out an internal and/or external washing of the tube (200) like the one in step 6,
(11) moving the glass tube (200) located in the mirroring chain (210) until the fifth fixed station (270),
(12) carrying out an internal and/or external drying of the tube (200), consisting in heating the treated surface with air at between 20 and 80 °C by means of a device equal to the cleaning device of step 4,
in the case of external partial mirroring, the following steps are added
(19) moving the glass tube (200) located in the mirroring chain (210) until the sixth fixed station (270),
(20) depositing a copper layer by spraying and carrying out an external washing of the tube (200) by means of spraying a washing liquid, preferably demineralized water-based,
(21) moving the glass tube (200) located in the mirroring chain (210) until the seventh fixed station (270),
(22) depositing one or two layers of anti-corrosion paint by spraying,
(23) moving the glass tube (200) located in the mirroring chain (210) until the eighth fixed station (270),
(24) depositing mechanical and UV protective paint by spraying,
(25) moving the glass tube (200) located in the mirroring chain (210) until the ninth fixed station (270),
(26) optional curating step for the protective paint by means of an infrared oven,
(27) moving the glass tube (200) located in the mirroring chain (210) until the tenth fixed station (270),
(28) external drying of the tube consisting in heating the treated surface with air at between 20 and 80 °C,
(29) extracting the tube by means of the output facility, which can be manual or automatic.

3. Method according to claims 1 or 2, **characterized in that** the washing is carried out with hot at 80 °C.

4. Method according to claims 1 or 2, **characterized in that** the sensitization step consists in spraying an aqueous solution of stannous chloride (SnCl2, 2H20) or a SnS04 / H2SO4 / quinol / alcohol solution, where the stannous chloride solution has a concentration between 0.005 and 0.2 % by weight of pure stannous chloride and the pH of the solution ranges between 2 and 5; being in contact with the substrate to be mirrored for a time varying according to the used concentration but always less than 30 seconds;

5. Method according to claims 1 or 2, **characterized in that** the super-sensitization step comprises the spraying of a palladium chloride or silver chloride-based aqueous solution suitable to react with Sn2+; where the time is less than 2 minutes.

6. Method according to claim 5, **characterized in that** the solution is an aqueous palladium dichloride solution at 0.02%.

7. Method according to claims 1 or 2, **characterized in that**, in the plating step, a silver solution and a reducing solution are mixed before entering into contact with the substrate; sodium hydroxide or ammonium hydroxide is added to one of the solutions to create an appropriate pH; the contact time of the reducing and silver solutions is less than two minutes; the reflective silver layer deposited on the surface of the glass tube has a thickness ranging between 40 and 140 nm; the reducing and silver solutions can be applied alternatively or simultaneously, and when applied simultaneously, the mixture of the solutions sprayed must take place just before the contact of the same with the glass substrate.

8. Method according to claim 7, **characterized in that** the ionic silver solution is a solution in which the silver is presented in a ionic state and is very soluble in water, such as silver nitrate with ammonium, and the reducing solution is formed with inverted sugars, N-methylglucamine, D-glucamine, glucono-delta-lactone (GDL) or other components known as reducing agents,

9. Method according to claim 8, **characterized in that** during the plating step, the silver solution (solution A) and the reducing solution (solution B) are composed by:
- Solution A: 6 g of silver nitrate, 12 ml of ammonium and 4 g of sodium hydroxide in 1000 ml of distilled water.
- Solution B: 10 g of dextrose and 0.2 ml of formaldehyde in 1000 ml of distilled water.

10. Method according to claim 7, **characterized in that** the reducing and silver solutions are applied alternatively.

11. Method according to claim 7, **characterized in that** the reducing and silver solutions are applied simultaneously, being the mixture of the solutions sprayed produced just before of the contact of the same with the glass substrate.

12. Method according to claims 1 or 2, **characterized in that** the deposition of copper is carried out by making the plated surface to be treated enter into contact with an aqueous alkaline copper solution containing one copper salt soluble in water, one reducing agent, one tartrate salt, a pH-controlling agent and a salt from a metal selected from the group consisting of cobalt or nickel; the copper solution is prepared by dissolving a copper salt in water, such as copper sulfate, with a nickel or cobalt salt, such as nickel sulfate or cobalt sulfate, mixing the solution; next, a commercial aqueous formaldehyde solution, such as an aqueous solution with 37% by weight of formaldehyde, is added; on the other hand, the reducing solution is prepared with the tartrate salt, such as sodium-potassium tartrate, a pH-controlling agent, such as sodium hydroxide, which ensures a basic pH, and water.

13. Method according to claim 12, **characterized in that** the reducing and copper solutions are applied alternatively.

14. Method according to claim 12, **characterized in that** the reducing and copper solutions are applied simultaneously.

15. Method according to claims 1 or 2, **characterized in that** the application of the anti-corrosion paint is carried out in layers that are less than 100 µm thick, being the paint lead-free or substantially lead-free and alkyd resin, epoxy, vinyl or polyurethane-based.

16. System for partial mirroring of glass tubes appropriate to carry out the procedure described in the previous claims, **characterized in that** it includes a tube supply facility, a mirroring chain with different fixed stations in which the different steps for the partial mirroring of the tube are carried out, and at least one sensor and at least one pneumatic cylinder (270) are found at each fixed station, and said pneumatic cylinder (270) has the corresponding tool installed at each extremity and covers the tube (200) longitudinally, and a tube output facility,

17. System for partial mirroring of glass tubes according to claim 16, where the tube installation facility comprises a flat profile structure with a specific inclination (310) through which the tubes (200) roll down, and a fixed flange (320) retaining them at the end and introducing them at the beginning of the chain (210).

18. System for partial mirroring of glass tubes according to claim 16, **characterized in that** the mirroring chain (210) comprises the chain (290) itself, formed by links, which moves over calibrated crowns, located over four parallel beams (220), supported by a fixed bedplate, four flanges (230, 231), two of which have a greater height than the other two (231) and are fixed to the lateral extremities of the chain (210), a reducing-variable speed engine set (240), making an axis (250) fixed to the system rotate thanks to four bearings (260) that are fixed to the edges of the beams (220), where the axis (250) has a serrated wheel making the chain (210) move.

19. System for partial mirroring of glass tubes according to claim 16, **characterized in that** the tool is a diffuser nozzle, or two spray diffuser nozzles or a single nozzle with a double diffuser, facing downwards.
